# EUROPEAN PATENT APPLICATION

(11) **EP 1 522 954 A2**
(43) Date of publication of application: **13.04.2005**
(21) Application number: 04255840.3
(22) Date of filing: 24.09.2004
(51) Int. Cl.: G06K 15/00, B41J 29/00

(54) **User interface for printer and networked printer**

(30) Priority: 25.09.2003 US 506206 P; 25.09.2003 US 506263 P; 25.09.2003 US 506302 P; 25.09.2003 US 506303 P; 25.09.2003 US 506411 P; 30.03.2004 US 814500; 30.03.2004 US 814700
(71) Applicant: Ricoh Company, Tokyo 143-8555 (JP)
(72) Inventor: Hart, Peter E. c/o Ricoh Innovations, Inc., Menlo Park California 94025-7022 (US); Hull, Jonathan J. c/o Ricoh Innovations, Inc., Menlo Park California 94025-7022 (US); Graham, Jamey c/o Ricoh Innovations, Inc., Menlo Park California 94025-7022 (US); Piersol, Kurt W. c/o Ricoh Innovations, Inc., Menlo Park California 94025-7022 (US)
(74) Representative: Mounteney, Simon James

(57) **Abstract**

A multifunction printer enables the printing of time-based media and is operated via a user interface. The user interface includes a touch screen for accepting command inputs and providing information to a user. Time-based media data is received by the printer from a media source specified via the user interface. A user specifies one or more multimedia processing functions for the printer to apply to the data. The printer performs the specified functions, and previews the output to the user via a display of the user interface. If the user decides to print the previewed output, the user specifies one or more output devices, such that the printer can print conventional printed output and/or to a specified electronic output.

## Description

### BACKGROUND OF THE INVENTION

### Field of the Invention

This invention relates generally to printers that have embedded functionality for printing time-based media, and in particular to a user interface for operating a printer that prints time-based media resulting in a combination of a printed output and a related electronic data output.

### Description of the Related Art

Conventional printers receive documents in a variety of formats and print the contents of the documents in accordance with a proper format. For example, a printer enabled to print Portable Document Format (PDF) documents will correctly recreate the original appearance of the document, regardless of the platform being used to view the document.

Today, as more databases and computer networks are interconnected, people often have multiple data systems and destinations in which to store information. For example, a person may receive an email containing information that he wants to retain. The person may want to print some or all of the information. The person may further want to add the information to a database or to send the information to other people or destinations or to add the information to a web page. Currently, the person will need to execute several different software programs and will need to type multiple commands into the programs. He may also need to re-enter the information into one or more programs. This is not efficient and is prone to human error, since human beings occasionally forget to perform one of more of the tasks usually associated with a received document and are also prone to making typographical errors.

Some conventional printers incorporate a management function in which the printer monitors its own internal functions and displays an alert if, for example, its toner is low or it is out of paper. This action is based on the printer doing "self-monitoring," not on any monitoring of the documents to be printed.

While conventional printers can print documents in a wide variety of formats, these printers are fundamentally limited in their ability to reproduce different kinds of media. For example, it is standard technology for a printer to produce images of static text, pictures, or a combination of the two. But because these printers print onto paper or another similar fixed medium, they cannot record the nuances of time-based media very well.

In developing a printer that is equipped to print time-based media without the limitations of conventional printers, a user interface for controlling such a printer is needed. It is further desirable that such a user interface be operable with a printer that performs at least some of the necessary processing itself rather than requiring an attached computer or other device to perform all of the processing. Ideally, the user interface should allow a user to specify how much processing is done by the printer.

### SUMMARY OF THE INVENTION

A multifunction printer enables the printing of time-based media. In a typical hardware configuration for such a multifunction printer, a printer includes a print engine that produces a paper or other printed output and one or more electronic devices the produce a related electronic output. Together, the printed and electronic outputs provide an improved representation of the time-based media over that of a convention paper printer.

A user interface provides access to functionality of the printer. In a preferred embodiment, the user interface includes a touch screen for accepting command inputs and providing information to a user. In one alternative embodiment, input is provided by way of a keypad, keyboard, or other input device. In another embodiment, the user interface is located on a device connected to the printer via a network.

Time-based media data is received by the printer from a media source specified via the user interface. A user specifies one or more multimedia processing functions for the printer to apply to the data. The printer performs the specified functions, and previews the output to the user via a display of the user interface. If the user decides to print the previewed output, the user specifies one or more output devices, such that the printer can print conventional printed output and/or to a specified electronic output. In one embodiment, the user interface enables a user to specify a proportion of processing work that is done by the printer, and a proportion done by another device.

### BRIEF DESCRIPTION OF THE DRAWINGS

Fig. 1 is a block diagram illustrating a printer having a user interface in accordance with an embodiment of the present invention.
Fig. 2 illustrates an overview of a generalized process for creating a representation of time-based media data in accordance with an embodiment of the present invention.
Fig. 3 illustrates an example of a user interface for selecting an input source in accordance with an embodiment of the present invention.
Fig. 4 illustrates a user interface display for selecting an audio multimedia processing function in accordance with an embodiment of the present invention.
Fig. 5 illustrates a user interface display for selecting a video multimedia processing function in accordance with an embodiment of the present invention.
Fig. 6 illustrates a user interface display for previewing output in accordance with an embodiment of the present invention.
Fig. 7 illustrates a user interface display for selecting output devices for printing in accordance with an embodiment of the present invention.
Fig. 8 is a block diagram illustrating a printer and a device having an associated user interface in accordance with an embodiment of the present invention.
Fig. 9 is an illustration of a user interface screen for distributing processing between devices in accordance with an embodiment of the present invention.
Fig. 10 is an illustration of a user interface screen in accordance with an embodiment of the present invention.

The figures depict preferred embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION OF THE PREFERRED EMBODIMENTS

Various embodiments of a multifunction printer enable the printing of time-based media in a useful and intelligent format. To create a representation of this time-based media, the printer produces a printed output and a related electronic output, which together provide a representation of the received media. Depending on the desired application for the printer, the printer may include any number of devices for receiving the media, printing the printed output, and producing the electronic output. The described user interface is meant to be generally applicable not only to the specific combinations of input and output devices described herein, but also to additional combinations not specifically disclosed, as would be understood by those of skill in the art from the present disclosure.

### Printer Architecture

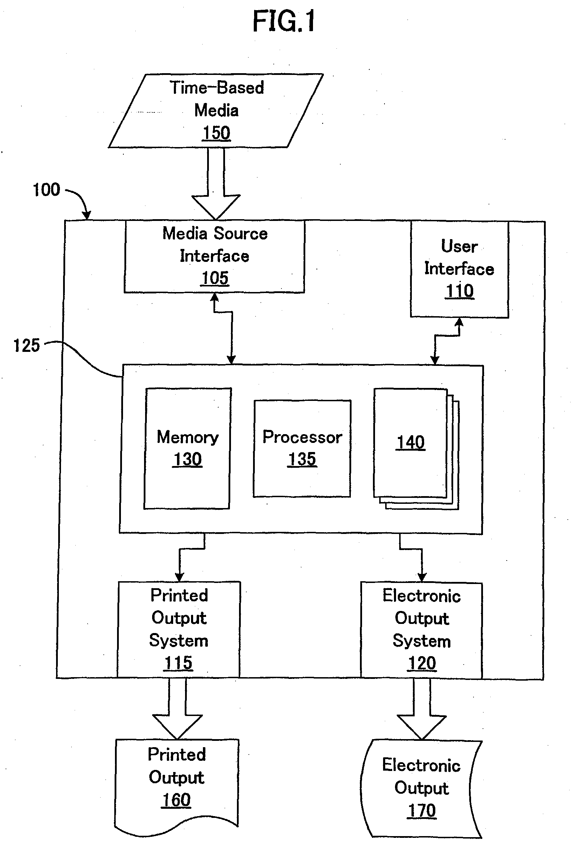

**Fig. 1** is a high-level diagram of one embodiment of the printer 100. Printer 100 includes a media source interface 105, a user interface 110, a printed output system 115, an electronic output system 120, and a media processing system 125. Capable of receiving time-based media 150, the media source interface 105 can take a variety of forms and may include one or more devices that can receive media data or create media data by observing a media event. Similarly, the printed output system 115 and the electronic output system 120 can take a variety of forms and may each include one or more devices tat can produce, respectively, a printed output 160 and an electronic output 170.

In one embodiment, the media processing system 125 includes a memory 130, a processor 135, and one or more embedded functionality modules 140. The embedded functionality modules 140 may include software, hardware, or a combination thereof for implementing at least a portion of the functionality of the multifunction printer 100. The media processing system 125 is coupled to the media source interface 105 and the user interface 110, allowing it to communicate with each of those devices. The media processing system 125 is also coupled to the printed output system 115 and to the electronic output system 120 for providing the appropriate commands and data to those systems.

Printer 100 is further described in related application, U.S. patent application number 10/814,931, filed March 30, 2004 entitled, "Printer Having Embedded Functionality for Printing Time-Based Media," to Hart et al., Attorney Docket No. 20412-08340. In this disclosure, a multifunction printer enables the printing of time-based media. Based on received time-based media data, the printer produces a paper or other printed output as well as a related electronic output. Together, the printed and electronic outputs provide a representation of the time-based media. Depending on the desired application for the printer, the printer may include any combination of mechanisms for receiving media data, printing the printed output, and producing the electronic output.

Printer **100** is further described in related application, U.S. patent application number 10/814,948, filed March 30, 2004, entitled, "Networked Printing System Having Embedded Functionality for Printing Time-Based Media," to Hart et al., Attorney Docket No. 20412-08341. In this disclosure, a networked printing system enables the printing of time-based media by sharing processing resources on a printer and on an attached network device, such as a computer system. Based on received time-based media data, the printing system produces a paper or other printed output as well as a related electronic output. Together, the printed and electronic outputs provide a representation of the time-based media. Depending on the desired application for the printer, the printer may include any combination of mechanisms for receiving media data, printing the printed output, and producing the electronic output

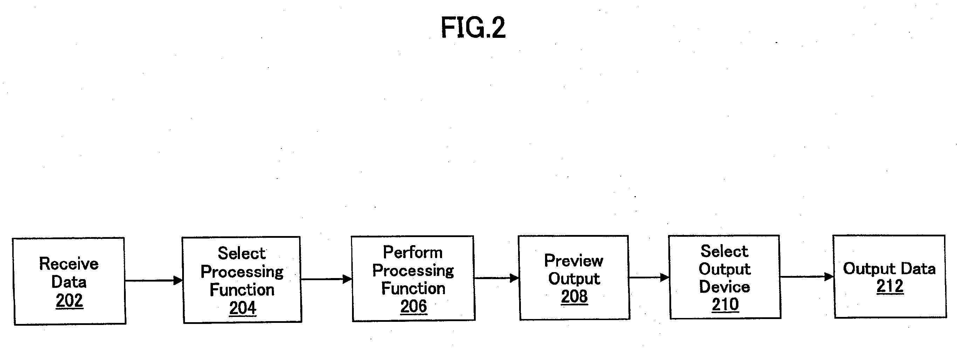

**Fig. 2** illustrates an overview of a generalized process in which the printer 100 creates a representation of time-based media data 150, in accordance with one embodiment of the invention. First in the illustrated embodiment, time-based media data is received **202** by the printer **100**. Using UI **110**, a user selects **204** a processing function to be performed on the data. Printer **100** then performs **206** the specified processing function, and previews **208** the output for the user. If the user is satisfied with the data as previewed, he selects **210** one or more output devices to which to send the time-based media data, and finally instructs printer **100** to output **212** the data. Each of the above steps is now described in greater detail.

User interface (UI) 110 of printer 100 preferably includes a screen on which information can be conveyed to the user. UI 110 preferably also includes a mechanism for allowing a user to input responses and make selections. In a preferred embodiment, printer UI 110 includes a touch screen, and the user makes selections and inputs responses by touching the appropriate part of the screen. In one embodiment, a keypad is also provided for entry of alphanumeric data. In an alternative embodiment, a joystick, trackball or other input device can be used to provide input and make selections.

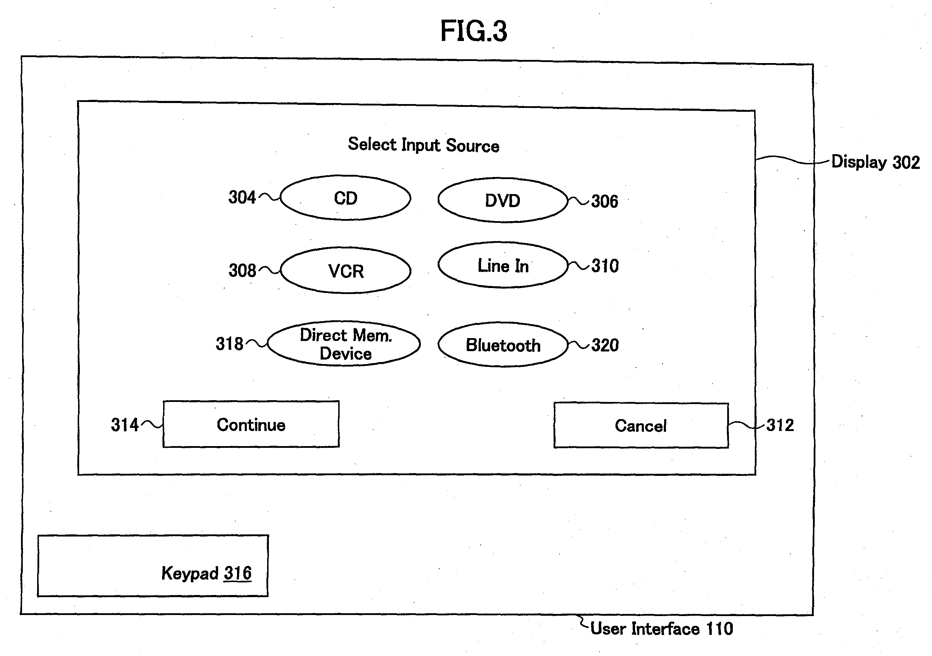

**Fig. 3** illustrates an example of a user interface **110** for selecting an input source. Display **302** of **UI 110** includes an instruction to the user to "select input source", and several selections for the user to choose from. In the illustrated embodiment, the user can select from CD 304, DVD 306, VCR 308 Line In 310, Direct Memory Device **318** and Bluetooth device **320**. Those of skill in the art will appreciate that in other embodiments, other input sources will be available. Also shown is a Cancel button **312**, should the user wish to cancel the action of selecting an input source, and a Continue button 314 for finalizing the selection. In a preferred embodiment, the user makes a selection by touching the appropriate button on the screen. In an alternative embodiment, the user can make the selection by pressing an appropriate button on keypad **316**.

Once a data source has been specified so that data can be received 202, a multimedia processing function is selected. In a preferred embodiment, processing functions include audio range selection and video range selection.

### Audio Range Selection

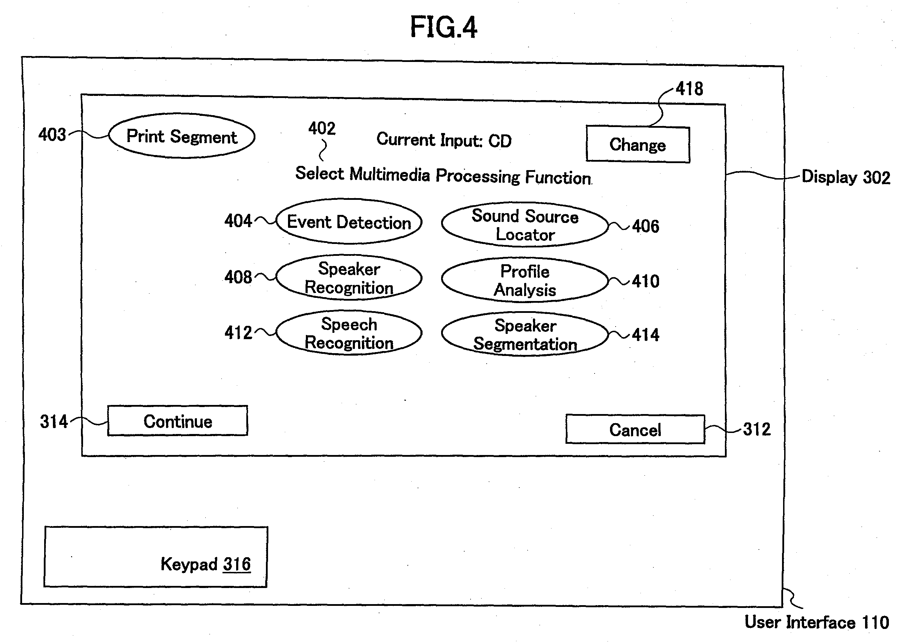

In a preferred embodiment, printer **100** is capable of performing many kinds of multimedia processing functions on the audio selection. Available functions preferably include event detection, speaker segmentation, speaker recognition, sound source location, speech recognition and profile analysis. As can be seen in **Fig. 4**, user interface **110** provides a user with the ability to select from among these options. In **Fig. 4**, display **302** of UI **110** includes a user instruction **402**, instructing the user to select the desired multimedia processing function. Display **302** also includes the available options, which in the illustrated case are print segment **403**, event detection **404**, sound source locator **406**, speaker recognition **408**, profile analysis **410**, speech recognition **412**, and speaker segmentation **414**. A button **318** is also provided in one embodiment to allow the current input to be changed, as described above with respect to **Fig. 3**. Finally, a cancel button 312 is available to allow the user to back to a previous screen, and a continue button 314 is available to be selected when the user has specified all of the desired processing functions.

Selecting one of the multimedia processing functions displays a submenu for the user specific to that processing function.

In one embodiment, if a user selects the Print Segment button 403 on display **302**, a dialog appears on display **302** showing an audio waveform and additionally providing slider controls with which the user can select portions of the current input to print. The manner in which output is created by the printer is discussed below.

Selecting the Event Detection button **404** displays a dialog to the user showing the results of applying audio event detection, such as clapping, yelling, or laughing, along a timeline. Each detected event is preferably accompanied by a confidence that it was detected correctly. The display **302** also includes a slider that lets the user adjust a threshold on the confidence values. As the slider is moved, events that are above threshold are displayed. The audio file is then preferably segmented into clips that bound the above-threshold events. In one embodiment, the display **302** also includes a series of check boxes that let the user choose which events to display.

Selecting the Speaker Segmentation button **414** presents a dialog showing the results of applying speaker segmentation along a timeline. Each segment is preferably shown in a different color and segments that were produced by the same speaker are shown in the same color.

Selecting the Speaker Recognition button **408** displays a dialog showing the results of applying speaker recognition along a timeline. In a preferred embodiment, the name of each speaker is accompanied by a confidence that it was detected correctly. The dialog preferably includes a series of check boxes that let the user choose which speakers to display, as well as a slider that lets the user adjust a threshold on the confidence values. As the slider is moved, speaker names that are above threshold are displayed. The audio file is segmented into clips that bound the above-threshold speaker identities.

In another embodiment, Speaker Segmentation and Speaker Recognition functions can be combined. In such an embodiment, a dialog shows the results of applying speaker segmentation and speaker recognition along a timeline. Each segment is shown in a different color and segments that were produced by the same speaker are shown in the same color. Each segment is accompanied by a confidence that the segmentation is correct. The speaker recognition results include text and optionally confidence values for each speaker name. Multiple speaker names could be associated with each segment. The user interface includes sliders that let the user adjust thresholds on confidence values. As the sliders are moved, speaker segments or speaker recognition results that are "above threshold" are displayed.

Selecting the Sound Source Locator button **406** displays a dialog showing the results of applying sound source localization along a timeline. The direction from which sound was detected is displayed as a sector of a circle. Each sector is accompanied by a confidence that it was detected correctly. The dialog additionally preferably includes a series of check boxes arranged around the circumference of a prototype circle that let the user choose which directions to display.

In another embodiment, Event Detection and Sound Source Locator functions can be combined. In such an embodiment, a dialog shows the results of applying sound source localization and audio event detection along a timeline. The direction from which sound was detected is displayed as a sector of a circle. Each sector is accompanied by a confidence that it was detected correctly. The user interface includes a series of check boxes arranged around the circumference of a prototype circle that let the user choose which directions to display. Each detected event is accompanied by a confidence that it was detected correctly. The user interface includes a series of check boxes that let the user choose which events (e.g., clapping, yelling, laughing) to display.

If a user selects the Speech Recognition button **412**, a dialog shows the results of applying speech recognition along a timeline. This includes text and optionally confidence values for each word or sentence. The dialog preferably includes a slider that lets the user adjust a threshold on the confidence values. As the slider is moved, words that are above threshold are displayed. The audio file is segmented into clips that bound the above-threshold words.

In another embodiment, the speech recognition results are matched against results from a Profile Analysis 410, in which a pre-existing text-based profile that represents the user's interests. The dialog includes a slider that lets the user adjust a threshold on the confidence values. Another slider adjusts a threshold on the degree of match between the profile and the speech recognition results. As the sliders are moved, words that are above threshold are displayed.

In another embodiment, the user interface also shows the results of applying audio event detection, such as clapping, yelling, or laughing, along a timeline in combination with speech recognition, speaker segmentation, or speaker recognition. Each detected event is accompanied by a confidence that it was detected correctly. The user interface includes sliders that let the user adjust thresholds on the confidence values.

In another embodiment, the functions of Event Detection, Speech Recognition and Speaker Recognition can be combined. In such an embodiment, a dialog shows the results of applying speech recognition along a timeline, and additionally shows the results of applying audio event detection, such as clapping, yelling, or laughing, along a timeline; and the results of applying speaker recognition along the timeline. The dialog includes a series of check boxes that let the user choose which speakers to display, and additionally includes sliders that let the user adjust thresholds on the confidence values.

In another embodiment, Event Detection, Speech Recognition and Speaker Segmentation can be combined. In such an embodiment, a dialog shows the results of applying speech recognition along a timeline, and additionally shows the results of applying audio event detection, such as clapping, yelling, or laughing, along a timeline; and the results of applying speaker segmentation along the timeline. Each segment is shown in a different color and segments that were produced by the same speaker are shown in the same color. The dialog includes sliders that let the user adjust thresholds on the confidence values.

In another embodiment, Speech Recognition, Event Detection and Sound Source Locator functions can be combined. In such an embodiment, a dialog shows the results of applying speech recognition along a timeline, and additionally shows the results of applying audio event detection, such as clapping, yelling, or laughing, along a timeline, and also displays the direction from which sound was detected as a sector of a circle. The dialog includes a series of check boxes arranged around the circumference of a prototype circle that let the user choose which directions to display. The dialog includes sliders that let the user adjust thresholds on the confidence values.

### Video Range Selection

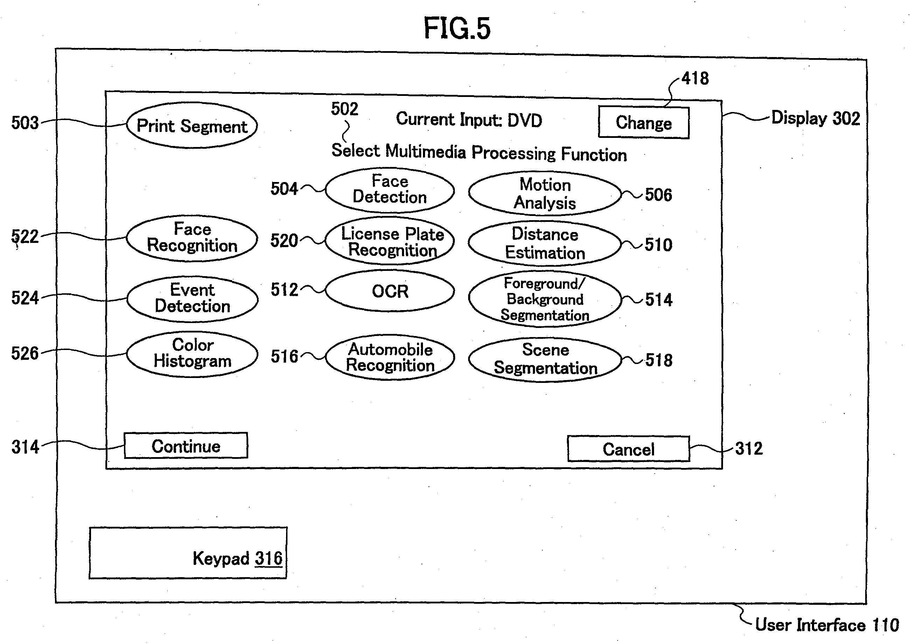

In a preferred embodiment, printer **100** is capable of performing many multimedia processing functions on a video selection. Available functions preferably include event detection, color histogram analysis, face detection, face recognition, optical character recognition (OCR), motion analysis, distance estimation, foreground/background segmentation, scene segmentation, automobile recognition and license plate recognition. As can be seen in **Fig. 5**, user interface **110** provides a user with the ability to select from among these options. In **Fig. 5**, display **302** of UI **110** includes a user instruction 502, instructing the user to select the desired multimedia processing function. Display **302** also includes the available options, which in the illustrated case are selectable via buttons for Print Segment 503, Event Detection **524**, Color Histogram Analysis **526**, Face Detection **504**, Face Recognition **522**, Optical Character Recognition (OCR) **512**, Motion Analysis **506**, Distance Estimation **510**, Foreground/Background Segmentation **514**, Scene Segmentation **518**, Automobile Recognition **516** and license plate recognition **520**. A button 418 is also provided in one embodiment to allow the current input to be changed, as described above with respect to **Fig. 3**. Finally, a cancel button **312** is available that returns the user to a previous screen, and a continue button 314 is available to be selected when the user has specified all of the desired processing functions.

Selecting one of the multimedia processing functions displays a submenu for the user specific to that processing function.

In one embodiment, if a user selects the Print Segment button 403, dialog box **302** shows key frames along a timeline and has slider controls that let the user select portions of a given video file to print. The manner in which output is created by the printer is discussed below.

Selecting the Event Detection button **524** displays a dialog showing the results of applying a video event detection algorithm along a timeline. Examples of video events include cases when people stand up during a meeting or when they enter a room. A slider control is preferably provided to let the user select portions of a given video file to print, based on a confidence value.

Selecting the Color Histogram button **526** presents a dialog showing the results of applying a color histogram analysis algorithm along a timeline. For example, a hue diagram is shown at every 30-second interval. This allows a user to quickly locate the portions of a video that contain sunsets, for example. A slider control is preferably provided that lets the user select portions of a given video file to print, based on the histogram computation.

Selecting the Face Detection button **504** displays a dialog showing segments along a timeline that contain face images. Each segment is preferably accompanied by an integer that expresses the number of faces detected in the clip as well as a confidence value. Slider controls are preferably provided that let the user select portions of a given video file to print, based the confidence values. In another embodiment, the face images are clustered so that multiple instances of the same face are merged into one representation face image.

Selecting the Face Recognition button **522** presents a dialog showing names along a timeline that were derived by application of face recognition to video frames at corresponding points along the time line. Slider controls are preferably provided that let the user select portions of a given video file to print. Also, a series of checkboxes are provided that let the user select clips by choosing names.

Selecting the OCR button **512** causes each frame in the video to be OCR'd and subsampled, for example once every 30 frames, and the results displayed along a timeline. Slider controls are preferably provided to let the user select portions of a given video file to print based on the confidence values that accompany the OCR results. A text entry dialog is also preferably provided to let the user enter words that are searched within the OCR results. Clips that contain the entered text are indicated along the timeline. In one embodiment, results of the OCR function are clustered so that similar OCR results are merged.

Selecting the Motion Analysis button 506 displays a dialog showing the results of applying a motion analysis algorithm along a timeline. One type of motion analysis that can be used is a waveform having a magnitude that indicates the amount of detected motion. This allows a user to quickly locate the portions of a video that contain a person running across the camera's view, for example. A slider control preferably lets the user select portions of a given video file to print, based on the amount of motion that was detected.

Selecting the Distance Estimation button **510** presents a dialog showing the results of applying a distance estimation algorithm along a timeline. For example, in a surveillance camera application using two cameras separated by a known distance, the distance of each point from the camera can be estimated. A slider control preferably lets the user select portions of a given video file to print, based on their distance from the camera. For example, the user may wish to see only objects that are more than 50 yards away from the camera.

In one embodiment, the motion analysis algorithm and distance estimation algorithm are applied together.

Selecting the Foreground/Background Segmentation button **514** displays a dialog showing the results of applying a foreground/background segmentation algorithm along a timeline. At each point, the foreground objects are displayed. A clustering and merging algorithm can be applied across groups of adjacent frames to reduce the number of individual objects that are displayed. Slider controls are preferably provided to let the user select portions of a given video file to print based on the confidence value of the foreground / background segmentation as well as the merging algorithm.

Selecting the Scene Segmentation button **518** presents a dialog showing the results of applying a shot segmentation algorithm along a timeline. Each segment can be accompanied by a confidence value that the segmentation is correct. A slider control is preferably provided to let the user select portions of a given video file to print, based on the confidence value.

Selecting the Visual Inspection button 528 presents a dialog showing an image from an attached video camera. The user can outline areas of the scene and define parameters for the objects that could appear in those areas. For example, for circular objects, a slider control preferably lets a user choose the diameter and allowable variations. This can be applied to automatic inspection of objects on an assembly line such as ball bearings that should be perfectly circular with a diameter of 2.54 centimeters. The user can also choose actions that are executed when the selected parameters are exceeded. For example, a frame image should be grabbed and printed if a ball bearing is detected with a diameter different from the defined value by more than 0.01 centimeters. Also, an email can be sent to a specified user.

In one embodiment, scene segmentation can be combined with face recognition. In such an embodiment, each segment can be accompanied by a confidence value that the segmentation is correct. The results of face recognition are shown as names along the timeline. Slider controls are preferably provided to let the user select portions of a given video file to print, based the confidence values of shot segmentation and face recognition. Additionally, a series of checkboxes are provided to let the user select clips by choosing names.

In another embodiment, scene segmentation can be combined with face detection such that color or a special icon indicates segments on the timeline that contain face images. Each segment can be accompanied by an integer that expresses the number of faces detected as well as a confidence value. Slider controls are preferably provided to let the user select portions of a given video file to print, based the confidence values of shot segmentation and face detection.

In another embodiment, scene segmentation and OCR can be combined. In such an embodiment, a dialog shows the results of applying a shot segmentation algorithm along a timeline. Each segment can be accompanied by a confidence value that the segmentation is correct. Each frame in the video is OCR'd and subsampled, for example once every 30 frames, and the results are displayed along the timeline. A text entry dialog is also provided that lets the user enter words to be searched within the OCR results. Clips that contain the entered text are indicated along the timeline. Slider controls are preferably provided to let the user select portions of a given video file to print based on the confidence values that accompany the shot segmentation and OCR results. In another embodiment, names are also shown on the timeline that were derived by application of face recognition to video frames. Additionally, a series of checkboxes are provided that let the user select clips by choosing names. Slider controls are provided that let the user select portions of a given video file to print based on the confidence values that accompany the shot segmentation, OCR, and face recognition results.

In another embodiment, scene segmentation, OCR and face detection are combined. In that embodiment, segments on the timeline that contain face images are shown. Each segment can be accompanied by an integer that expresses the number of faces detected in the clip as well as a confidence value. Slider controls are preferably provided to let the user select portions of a given video file to print based on the confidence values that accompany the shot segmentation, OCR, and face detection results.

Selecting the Automobile Recognition button 516 displays a dialog for configuring and using the automobile recognition function. In one embodiment, a user operates a surveillance camera that creates many hours of video, most of which is not of interest to the user. The user needs to find and print only those sections that contain a specific object, for example a red Cadillac. For this purpose, each frame in the video is input to an automobile recognition technique and the results are displayed along a timeline. Slider controls are preferably provided that let the user select portions of a given video file to print based on the confidence values that accompany the automobile recognition results. A text entry dialog is also preferably provided that lets the user enter identifiers for the make, model, color, and year for an automobile that are searched within the automobile recognition results. Clips that contain the entered information are indicated along the timeline.

In another embodiment, a user often needs to find and print only those sections that contain a specific license plate number. For this purpose, a user can select the License Plate Recognition button 520. Each frame in the video is input to a license plate recognition technique and the results, typically a plate number, state, plate color, name and address of plate holder, outstanding arrest warrants, criminal history of the plate holder, etc., are displayed along a timeline. Slider controls are preferably provided to let the user select portions of a given video file to print based on the confidence values that accompany the license plate recognition results. A text entry dialog is also provided that lets the user enter identifiers for the plate number, state, and year, etc. for a license plate that are searched within the license plate recognition results. Clips that contain the entered information are indicated along the timeline.

In another embodiment, a user needs to find and print only those sections that contain a specific object, such as a speeding red Cadillac. The automobile recognition function can be combined with motion analysis for this purpose. Each frame in the video is preferably input to an automobile recognition technique and the results are displayed along a timeline. Additionally, a motion analysis technique is applied to the video to estimate the automobile's speed from one frame to the next. Slider controls are preferably provided that let the user select portions of a given video file to print based on the confidence values that accompany the automobile recognition and motion analysis results. A text entry dialog is also provided that lets the user enter identifiers for the make, model, color, and year for an automobile and its speed that are searched within the automobile recognition and motion analysis results. Clips that contain the entered information are indicated along the timeline.

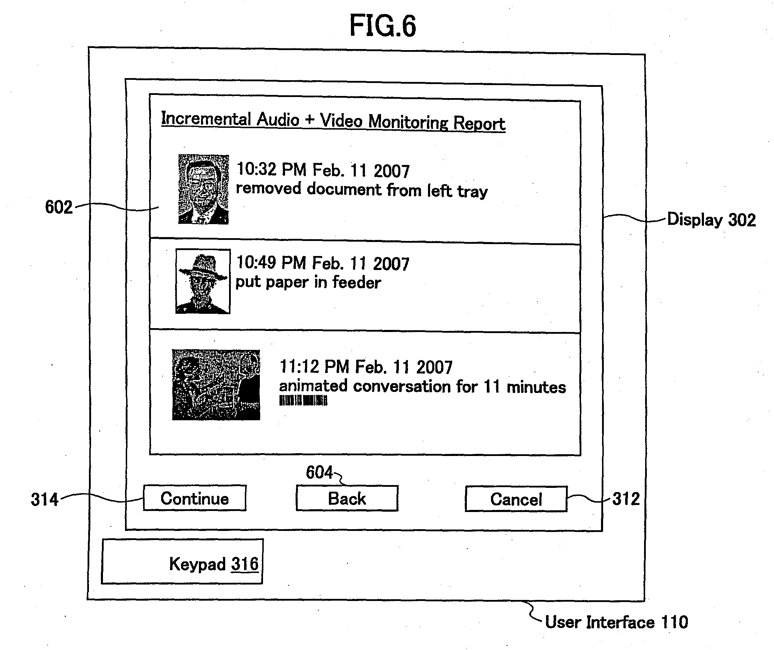

After the user has selected one or more multimedia processing functions to apply, printer **100** performs the selected functions and produces a preview of the result. **Fig. 6** illustrates an example of a previewed result. In **Fig. 6**, display **302** shows a preview 602 of the output that will be printed, as well as a Continue button 314, a Cancel button 312 and a Back button 604. If the user does not like the previewed output 602, he can select the Back button 604, which in a preferred embodiment returns the user to the previous screen. Alternatively, the user can press the Cancel button 312 to cancel the print operation completely. If the user wants to continue with the print job, he selects the Continue button 314 to go on. As those of skill in the art will recognize, the particular preview 602 depends on the features that were applied. In the illustrated example of Fig. 6, sound localization and motion detection have been employed to create the displayed page.

Once the user is satisfied with the previewed output 602 and selects the Continue button, the next task in a preferred embodiment is to select the output path. In a preferred embodiment, output can be directed along a printed output path 160, an electronic output path 170, or both.

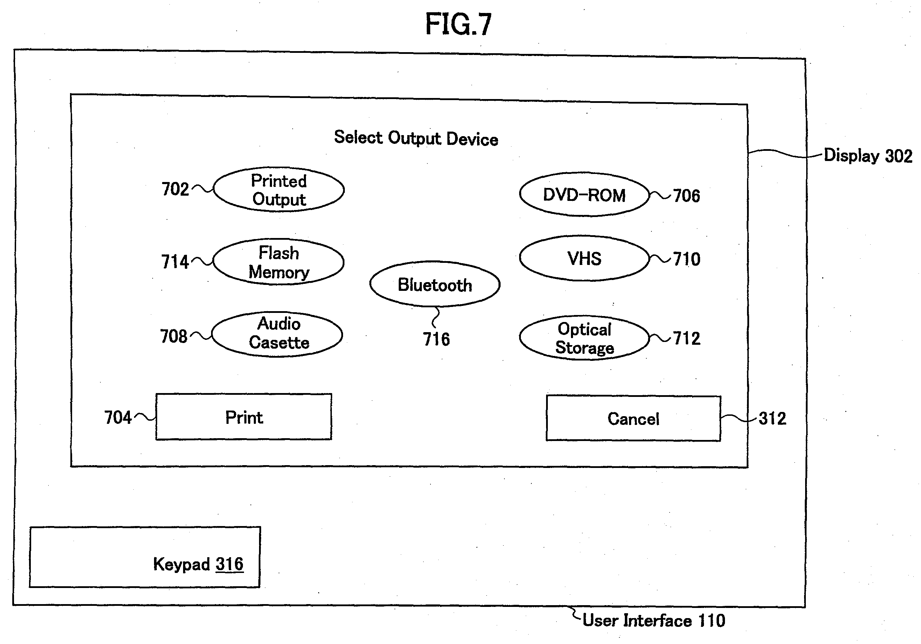

Referring now to **Fig. 7**, there is shown an example of a display **302** of a user interface **110** with which a user can select an output path. By selecting the Printed Output button **702**, data will be routed to the printed output system 115 and be printed in a conventional manner by printer **100**. If the user selects one of the buttons associated with the electronic output system **120**, data will be routed to the particular output device selected. In the illustrated case of **Fig. 7**, the user can select a DVD-ROM drive **706**, an Audio Cassette **708**, VHR **710**, Optical Storage **712**, Flash Memory **714**, or Bluetooth device **716**. Once the user has made his selection, he presses the Print button **704** to send the output to the selected locations, or Cancel 312 to quit.

The present invention has been described in particular detail with respect to a limited number of embodiments. Those of skill in the art will appreciate that the invention may additionally be practiced in other embodiments. First, the particular naming of the components, capitalization of terms, the attributes, data structures, or any other programming or structural aspect is not mandatory or significant, and the mechanisms that implement the invention or its features may have different names, formats, or protocols. Further, the system may be implemented via a combination of hardware and software, as described, or entirely in hardware elements. Also, the particular division of functionality between the various system components described herein is merely exemplary, and not mandatory; functions performed by a single system component may instead be performed by multiple components, and functions performed by multiple components may instead performed by a single component. For example, the particular functions of the user interface 110 and so forth may be provided in many or one module.

### Distributed Processing

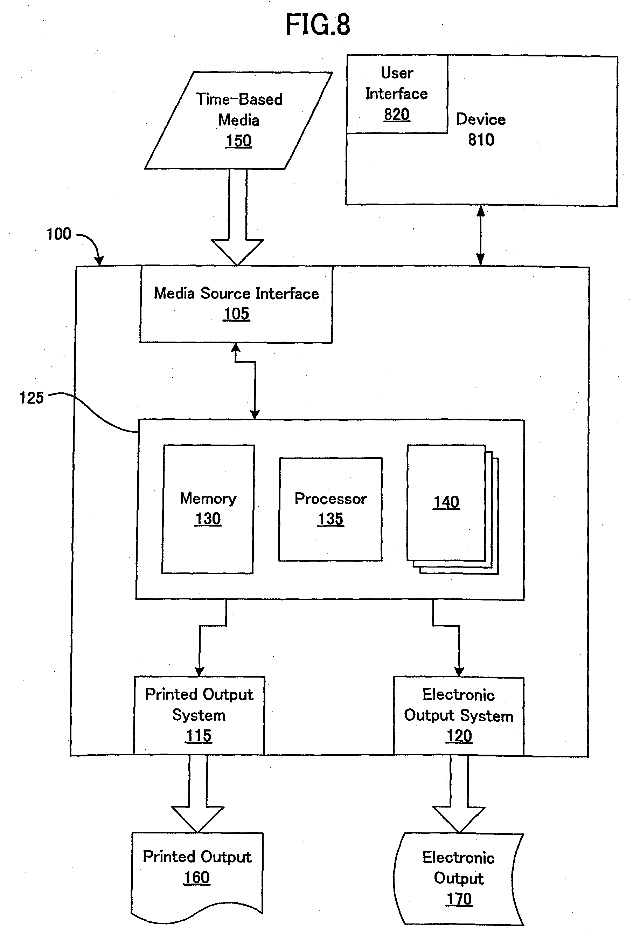

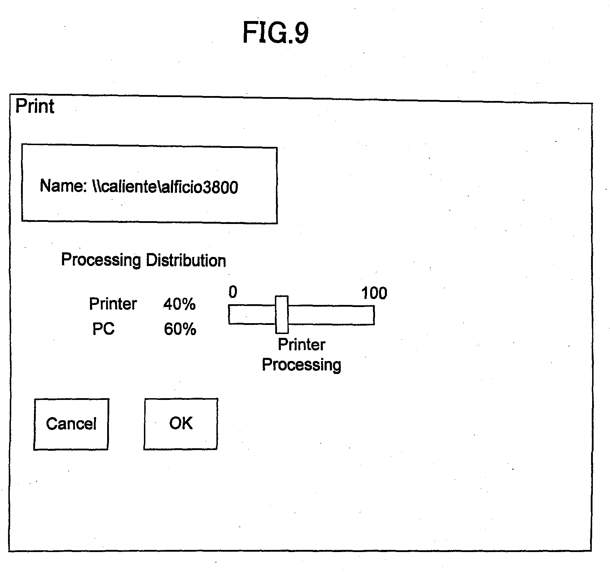

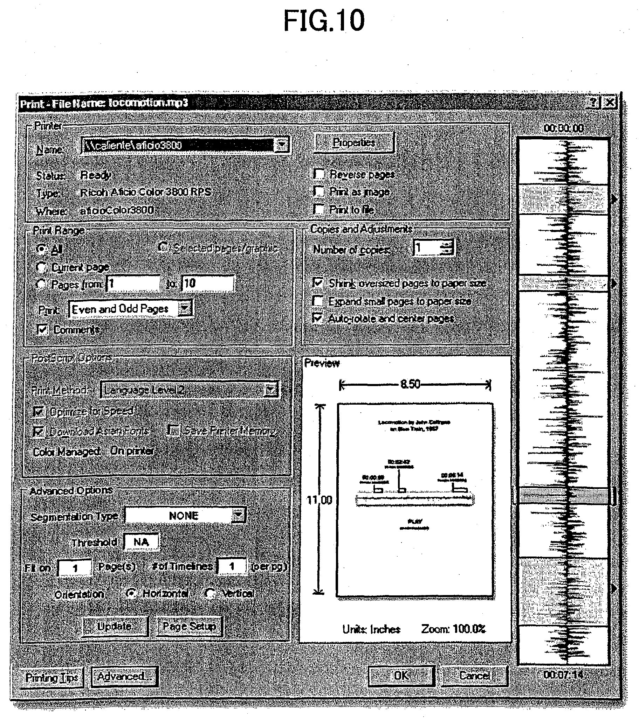

In one embodiment, and referring now to Fig. 8, multimedia processing functions applied to the time based media are distributed between printer 100 and device 810. Distributing processing functions among multiple devices improves efficiency and allows, for example, device 810 to perform processing functions for which it has a specialized architecture, while printer 100 performs functions requiring less processing power. Time-based media 150 may be stored in or generated by device 810, or may be entirely separate from device 810, but in communication with it. In yet another embodiment, device 810 is not directly in communication with time-based media 150, but communicates with it via printer 100. Fig. 9 illustrates an example of a user interface for adjusting the distribution of processing power between devices. In Fig. 10, the printer is configured to perform 40% of the required processing, while a PC is configured to perform 60% of the processing.

In one embodiment, device 810 is a computer such as a desktop PC. Device 810 preferably includes an interface 820, which performs functionality similar to that described above with reference to printer user interface 110. An example of a user interface is illustrated in Fig. 10, which shows a screen for printing user-selected ranges in an audio file.

The present invention has been described in particular detail with respect to a limited number of embodiments. Those of skill in the art will appreciate that the invention may additionally be practiced in other embodiments. First, the particular naming of the components, capitalization of terms, the attributes, data structures, or any other programming or structural aspect is not mandatory or significant, and the mechanisms that implement the invention or its features may have different names, formats, or protocols. Further, the system may be implemented via a combination of hardware and software, as described, or entirely in hardware elements. Also, the particular division of functionality between the various system components described herein is merely exemplary, and not mandatory; functions performed by a single system component may instead be performed by multiple components, and functions performed by multiple components may instead performed by a single component. For example, the particular functions of the user interface 110 and so forth may be provided in many or one module.

Some portions of the above description present the feature of the present invention in terms of algorithms and symbolic representations of operations on information. These algorithmic descriptions and representations are the means used by those skilled in the user interface and printing arts to most effectively convey the substance of their work to others skilled in the art. These operations, while described functionally or logically, are understood to be implemented by computer programs. Furthermore, it has also proven convenient at times, to refer to these arrangements of operations as modules or code devices, without loss of generality.

It should be borne in mind, however, that all of these and similar terms are to be associated with the appropriate physical quantities and are merely convenient labels applied to these quantities. Unless specifically stated otherwise as apparent from the present discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention could be embodied in software, firmware or hardware, and when embodied in software, could be downloaded to reside on and be operated from different platforms used by real time network operating systems.

The present invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and displays presented herein are not inherently related to any particular computer or other apparatus. Various general-purpose systems may also be used with programs in accordance with the teachings herein, or it may prove convenient to construct more specialized apparatus to perform the required method steps. The required structure for a variety of these systems will appear from the description above. In addition, the present invention is not described with reference to any particular programming language. It is appreciated that a variety of programming languages may be used to implement the teachings of the present invention as described herein, and any references to specific languages are provided for disclosure of enablement and best mode of the present invention.

Finally, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention.

## Claims

1. A printer for printing time-based media, the printer comprising:
a communication interface for receiving time-based media data from a media source;
a processor for performing a multimedia function on the time-based media data to obtain an electronic image and associated print data;
a user interface, communicatively coupled to the processor, including:
a display, for providing data to a user;
an input device, for receiving data from the user;
a first output device for receiving the associated print data from the processor and producing output on a printer; and
a second output device coupled to the processor for receiving the electronic image and producing an electronic output from the image.

2. The printer of claim 1 wherein the multimedia function includes selecting a range of audio data in response to received input from the user.

3. The printer of claim 1 wherein the multimedia function includes applying audio event detection to the time-based media data.

4. The printer of claim 3 wherein the multimedia function further includes determining a confidence level associated with the audio event detection.

5. The printer of claim 1 wherein the multimedia function includes applying a speaker segmentation function to the time-based media data.

6. The printer of claim 1 or 5 wherein the multimedia function includes applying a speaker recognition function to the time-based media data.

7. The printer of claim 1 wherein the multimedia function includes applying a sound source localization function to the time-based media data.

8. The printer of claim 7 wherein the multimedia function further includes applying audio event detection to the time-based media data.

9. The printer of claim 1 wherein the multimedia function includes applying a speech recognition function to the time-based media data.

10. The printer of claim 9 wherein the multimedia function includes applying a profile analysis function to the time-based media data.

11. The printer of claim 9 wherein the multimedia function includes applying an audio event detection function to the time-based media data.

12. The printer of claim 11 wherein the multimedia function further includes applying a speaker recognition function to the time-based media data.

13. The printer of claim 11 wherein the multimedia function further includes applying a speaker segmentation function to the time-based media data.

14. The printer of claim 11 wherein the multimedia function further includes applying a sound localization function to the time-based media data.

15. The printer of claim 1 wherein the multimedia function includes selecting a range of video data in response to received input from the user.

16. The printer of claim 1 wherein the multimedia function includes applying a video event detection function to the time-based media data.

17. The printer of claim 1 wherein the multimedia function includes applying a color histogram analysis function to the time-based media data.

18. The printer of claim 1 wherein the multimedia function includes applying a face detection function to the time-based media data.

19. The printer of claim 18 wherein the multimedia function includes applying a clustering function to the time-based media data to merge multiple instances of a face into a representative face image.

20. The printer of claim 1 wherein the multimedia function includes applying a face recognition function to the time-based media data.

21. The printer of claim 1 wherein the multimedia function includes applying an optical character recognition function to the time-based media data.

22. The printer of claim 21 wherein the multimedia function further includes applying a clustering function to the time-based media data to merge similar results of the optical character recognition.

23. The printer of claim 1 wherein the multimedia function includes applying a motion analysis function to the time-based media data.

24. The printer of claim 1 or claim 23 wherein the multimedia function includes applying a distance estimation function to the time-based media data.

25. The printer of claim 1 wherein the multimedia function includes applying foreground/background segmentation function to the time-based media data.

26. The printer of claim 1 wherein the multimedia function includes applying a scene segmentation function to the time-based media data.

27. The printer of claim 26 wherein the multimedia function further includes applying a face recognition function to the time-based media data.

28. The printer of claim 26 wherein the multimedia function further includes applying a face detection function to the time-based media data.

29. The printer of claim 26 wherein the multimedia function includes applying an optical character recognition function to the time-based media data.

30. The printer of claim 29 wherein the multimedia function further includes applying a face recognition function to the time-based media data.

31. The printer of claim 29 wherein the multimedia function includes applying a face detection function to the time-based media data.

32. The printer of claim 1 wherein the multimedia function includes applying an automobile recognition function to the time-based media data.

33. The printer of claim 32 wherein the multimedia function further includes applying a motion analysis function to the time-based media data.

34. The printer of claim 1 wherein the multimedia function includes applying a license plate recognition function to the time-based media data.

35. The printer of claim 1 wherein the multimedia function includes applying a visual inspection function to the time-based media data.

36. The printer of claim 1 wherein the user interface is configured to allow a user to control a compact disc (CD) device.

37. The printer of claim 1 wherein the user interface is configured to allow a user to control a digital video disc (DVD) device.

38. The printer of claim 1 wherein the user interface is configured to allow a user to control an audio tape device.

39. The printer of claim 1 wherein the user interface is configured to allow a user to control a video tape device.

40. The printer of claim 1 wherein the user interface is configured to allow a user to control a multimedia server.

41. The printer of claim 1 wherein the user interface is configured to allow a user to control encryption hardware.

42. The printer of claim 1 wherein the user interface is configured to allow a user to control audio sound localization hardware.

43. The printer of claim 1 wherein the user interface is configured to allow a user to control motion detection hardware.

44. The printer of claim 1 wherein the user interface is configured to allow a user to control a MIDI player.

45. The printer of claim 1 wherein the user interface is configured to allow a user to control a cellular telephone.

46. The printer of claim 1 wherein the user interface is configured to allow a user to control a two-way radio.

47. The printer of claim 1 wherein the user interface is configured to allow a user to control a world wide web display.

48. The printer of claim 1 wherein the user interface is configured to allow a user to control a climate sensor.

49. The printer of claim 1 wherein the user interface is configured to allow a user to control a radio receiver.

50. The printer of claim 1 wherein the processor is further configured to display results of the multimedia function on the display of the user interface.

51. The printer of claim 1 wherein the second output device is a DVD drive.

52. The printer of claim 1 wherein the second output device is a CD drive.

53. The printer of claim 1 wherein the second output device is an audio tape drive.

54. The printer of claim 1 wherein the second output device is a video cassette device.

55. The printer of claim 1 wherein the second output device is a removable media device.

56. The printer of claim 1 wherein the second output device is an embedded audio recorder.

57. The printer of claim 1 wherein the second output device is an embedded video recorder.

58. The printer of claim 1 wherein the second output device is a non-volatile storage device.

59. The printer of claim 1 wherein the second output device is an embedded multimedia server.

60. The printer of claim 1 wherein the second output device is audio encryption hardware.

61. The printer of claim 1 wherein the second output device is video encryption hardware.

62. The printer of claim 1 wherein the second output device is audio sound localization hardware.

63. The printer of claim 1 wherein the second output device is a cellular telephone.

64. The printer of claim 1 wherein the second output device is a two-way radio.

65. The printer of claim 1 wherein the second output device is a world-wide web display.

66. The printer of claim 1 wherein the second output device is a radio receiver for receiving AM signals.

67. The printer of claim 1 wherein the second output device is a radio receiver for receiving FM signals.

68. The printer of claim 1 wherein the second output device is a radio receiver for receiving short wave signals.

69. The printer of claim 1 wherein the second output device is a satellite radio receiver.

70. The printer of claim 1 wherein the second output device is a weather alert receiver.

71. The printer of claim 1 wherein the second output device is an emergency alert monitor for receiving emergency broadcast system alerts.

72. The printer of claim 1 wherein the second output device is hardware for performing VGA screen captures.

73. The printer of claim 1 wherein the second output device is hardware for performing audio capture.

74. The printer of claim 1 wherein the second output device is hardware for capturing data from an electronic pen.

75. The printer of claim 1 wherein the second output device is a disposable media writer.

76. The printer of claim 1 wherein the second output device is a flash memory device.

77. The printer of claim 1 wherein the second output device is a wireless device.

78. A method for printing time-based media, the method comprising:
receiving time-based media data from a media source;
receiving user input, the user input specifying a multimedia function to perform on the time-based media;
performing the specified multimedia function on the time-based media data to obtain an electronic image and associated print data;
producing output on a printer from the associated print data from the processor and; and
producing an electronic output from the electronic image.

79. The method of claim 78 wherein the multimedia function includes selecting a range of audio data in response to received input from the user.

80. The method of claim 78 wherein the multimedia function includes applying audio event detection to the time-based media data.

81. The method of claim 80 wherein the multimedia function further includes determining a confidence level associated with the audio event detection.

82. The method of claim 78 wherein the multimedia function includes applying a speaker segmentation function to the time-based media data.

83. The method of claim 78 or 82 wherein the multimedia function includes applying a speaker recognition function to the time-based media data.

84. The method of claim 78 wherein the multimedia function includes applying a sound source localization function to the time-based media data.

85. The method of claim 84 wherein the multimedia function further includes applying audio event detection to the time-based media data.

86. The method of claim 78 wherein the multimedia function includes applying a speech recognition function to the time-based media data.

87. The method of claim 86 wherein the multimedia function includes applying a profile analysis function to the time-based media data.

88. The method of claim 86 wherein the multimedia function includes applying an audio event detection function to the time-based media data.

89. The method of claim 88 wherein the multimedia function further includes applying a speaker recognition function to the time-based media data.

90. The method of claim 88 wherein the multimedia function further includes applying a speaker segmentation function to the time-based media data.

91. The method of claim 88 wherein the multimedia function further includes applying a sound localization function to the time-based media data.

92. The method of claim 78 wherein the multimedia function includes selecting a range of video data in response to received input from the user.

93. The method of claim 78 wherein the multimedia function includes applying a video event detection function to the time-based media data.

94. The method of claim 78 wherein the multimedia function includes applying a color histogram analysis function to the time-based media data.

95. The method of claim 78 wherein the multimedia function includes applying a face detection function to the time-based media data.

96. The method of claim 95 wherein the multimedia function includes applying a clustering function to the time-based media data to merge multiple instances of a face into a representative face image.

97. The method of claim 78 wherein the multimedia function includes applying a face recognition function to the time-based media data.

98. The method of claim 78 wherein the multimedia function includes applying an optical character recognition function to the time-based media data.

99. The method of claim 98 wherein the multimedia function further includes applying a clustering function to the time-based media data to merge similar results of the optical character recognition.

100. The method of claim 78 wherein the multimedia function includes applying a motion analysis function to the time-based media data.

101. The method of claim 78 or claim 100 wherein the multimedia function includes applying a distance estimation function to the time-based media data.

102. The method of claim 78 wherein the multimedia function includes applying foreground/background segmentation function to the time-based media data.

103. The method of claim 78 wherein the multimedia function includes applying a scene segmentation function to the time-based media data.

104. The method of claim 103 wherein the multimedia function further includes applying a face recognition function to the time-based media data.

105. The method of claim 103 wherein the multimedia function further includes applying a face detection function to the time-based media data.

106. The method of claim 103 wherein the multimedia function includes applying an optical character recognition function to the time-based media data.

107. The method of claim 106 wherein the multimedia function further includes applying a face recognition function to the time-based media data.

108. The method of claim 106 wherein the multimedia function includes applying a face detection function to the time-based media data.

109. The method of claim 78 wherein the multimedia function includes applying an automobile recognition function to the time-based media data.

110. The method of claim 109 wherein the multimedia function further includes applying a motion analysis function to the time-based media data.

111. The method of claim 78 wherein the multimedia function includes applying a license plate recognition function to the time-based media data.

112. The method of claim 78 wherein the multimedia function includes applying a visual inspection function to the time-based media data.

113. A system for printing time-based media data, the system comprising.
a printing system for performing a multimedia function on the time-based media data;
a processing device, communicatively coupled to the printer by a network for performing a multimedia function on the time-based media data; and
a user interface for receiving a user selection of an amount of processing to be performed by the printer and an amount of processing to be performed by the processing device.

114. The system of claim 113 wherein the processing device includes the user interface.

115. The system of claim 113 wherein the printer includes the user interface.

116. The system of claim 113 wherein the user interface is on a device separate from the processing device and the printer.

117. The system of claim 114,115 or 116 wherein the user interface displays status information about the performance of the multimedia function.

118. The system of claim 113 wherein the processing device is a personal computer.

119. The system of claim 113 wherein the multimedia function includes selecting a range of audio data in response to received input from the user.

120. The system of claim 113 wherein the multimedia function includes applying audio event detection to the time-based media data.

121. The system of claim 120 wherein the multimedia function further includes determining a confidence level associated with the audio event detection.

122. The system of claim 113 wherein the multimedia function includes applying a speaker segmentation function to the time-based media data.

123. The system of claim 113 or 122 wherein the multimedia function includes applying a speaker recognition function to the time-based media data.

124. The system of claim 113 wherein the multimedia function includes applying a sound source localization function to the time-based media data.

125. The system of claim 124 wherein the multimedia function further includes applying audio event detection to the time-based media data.

126. The system of claim 113 wherein the multimedia function includes applying a speech recognition function to the time-based media data.

127. The system of claim 126 wherein the multimedia function includes applying a profile analysis function to the time-based media data.

128. The system of claim 126 wherein the multimedia function includes applying an audio event detection function to the time-based media data.

129. The system of claim 128 wherein the multimedia function further includes applying a speaker recognition function to the time-based media data.

130. The system of claim 128 wherein the multimedia function further includes applying a speaker segmentation function to the time-based media data.

131. The system of claim 128 wherein the multimedia function further includes applying a sound localization function to the time-based media data.

132. The system of claim 113 wherein the multimedia function includes selecting a range of video data in response to received input from the user.

133. The system of claim 113 wherein the multimedia function includes applying a video event detection function to the time-based media data.

134. The system of claim 113 wherein the multimedia function includes applying a color histogram analysis function to the time-based media data.

135. The system of claim 113 wherein the multimedia function includes applying a face detection function to the time-based media data.

136. The system of claim 135 wherein the multimedia function includes applying a clustering function to the time-based media data to merge multiple instances of a face into a representative face image.

137. The system of claim 113 wherein the multimedia function includes applying a face recognition function to the time-based media data.

138. The system of claim 113 wherein the multimedia function includes applying an optical character recognition function to the time-based media data.

139. The system of claim 138 wherein the multimedia function further includes applying a clustering function to the time-based media data to merge similar results of the optical character recognition.

140. The system of claim 113 wherein the multimedia function includes applying a motion analysis function to the time-based media data.

141. The system of claim 113 or claim 140 wherein the multimedia function includes applying a distance estimation function to the time-based media data.

142. The system of claim 113 wherein the multimedia function includes applying foreground/background segmentation function to the time-based media data.

143. The system of claim 113 wherein the multimedia function includes applying a scene segmentation function to the time-based media data.

144. The system of claim 143 wherein the multimedia function further includes applying a face recognition function to the time-based media data.

145. The system of claim 143 wherein the multimedia function further includes applying a face detection function to the time-based media data.

146. The system of claim 143 wherein the multimedia function includes applying an optical character recognition function to the time-based media data.

147. The system of claim 146 wherein the multimedia function further includes applying a face recognition function to the time-based media data.

148. The system of claim 146 wherein the multimedia function includes applying a face detection function to the time-based media data.

149. The system of claim 113 wherein the multimedia function includes applying an automobile recognition function to the time-based media data.

150. The system of claim 149 wherein the multimedia function further includes applying a motion analysis function to the time-based media data.

151. The system of claim 113 wherein the multimedia function includes applying a license plate recognition function to the time-based media data.

152. The system of claim 113 wherein the multimedia function includes applying a visual inspection function to the time-based media data.

153. The system of claim 113 wherein the user interface is configured to allow a user to control a compact disc (CD) device.

154. The system of claim 113 wherein the user interface is configured to allow a user to control a digital video disc (DVD) device.

155. The system of claim 113 wherein the user interface is configured to allow a user to control an audio tape device.

156. The system of claim 113 wherein the user interface is configured to allow a user to control a video tape device.

157. The system of claim 113 wherein the user interface is configured to allow a user to control a multimedia server.

158. The system of claim 113 wherein the user interface is configured to allow a user to control encryption hardware.

159. The system of claim 113 wherein the user interface is configured to allow a user to control audio sound localization hardware.

160. The system of claim 113 wherein the user interface is configured to allow a user to control motion detection hardware.

161. The system of claim 113 wherein the user interface is configured to allow a user to control a MIDI player.

162. The system of claim 113 wherein the user interface is configured to allow a user to control a cellular telephone.

163. The system of claim 113 wherein the user interface is configured to allow a user to control a two-way radio.

164. The system of claim 113 wherein the user interface is configured to allow a user to control a world wide web display.

165. The system of claim 113 wherein the user interface is configured to allow a user to control a climate sensor.

166. The system of claim 113 wherein the user interface is configured to allow a user to control a radio receiver.

167. The system of claim 113 wherein the processor is further configured to display results of the multimedia function on the display of the user interface.

168. The system of claim 113 wherein the second output device is a DVD drive.

169. The system of claim 113 wherein the second output device is a CD drive.

170. The system of claim 113 wherein the second output device is an audio tape drive.

171. The system of claim 113 wherein the second output device is a video cassette device.

172. The system of claim 113 wherein the second output device is a removable media device.

173. The system of claim 113 wherein the second output device is an embedded audio recorder.

174. The system of claim 113 wherein the second output device is an embedded video recorder.

175. The system of claim 113 wherein the second output device is an non-volatile storage device.

176. The system of claim 113 wherein the second output device is an embedded multimedia server.

177. The system of claim 113 wherein the second output device is audio encryption hardware.

178. The system of claim 113 wherein the second output device is video encryption hardware.

179. The system of claim 113 wherein the second output device is audio sound localization hardware.

180. The system of claim 113 wherein the second output device is a cellular telephone.

181. The system of claim 113 wherein the second output device is a two-way radio.

182. The system of claim 113 wherein the second output device is a world-wide web display.

183. The system of claim 113 wherein the second output device is a radio receiver for receiving AM signals.

184. The system of claim 113 wherein the second output device is a radio receiver for receiving FM signals.

185. The system of claim 113 wherein the second output device is a radio receiver for receiving short wave signals.

186. The system of claim 113 wherein the second output device is a satellite radio receiver.

187. The system of claim 113 wherein the second output device is a weather alert receiver.

188. The system of claim 113 wherein the second output device is an emergency alert monitor for receiving emergency broadcast system alerts.

189. The system of claim 113 wherein the second output device is hardware for performing VGA screen captures.

190. The system of claim 113 wherein the second output device is hardware for performing audio capture.

191. The system of claim 113 wherein the second output device is hardware for capturing data from an electronic pen.

192. The system of claim 113 wherein the second output device is a disposable media writer.

193. A method for printing time-based media, the method, comprising:
receiving time-based media data from a media source;
receiving user input, the user input specifying a multimedia function to perform on the time-based media, an amount of processing to be performed by a printer, and an amount of processing to be performed by a processing device;
performing, by the printer, the amount of processing specified to be performed by the printer to carry out the specified multimedia function;
performing, by the processing device, the amount of processing specified to be performed by the processing device to carry out the specified multimedia function;
producing output on the printer associated with the processed media data; and
producing an electronic output associated with the processed media data.

194. The method of claim 193 wherein the user input is received at the printer.

195. The method of claim 193 wherein the user input is received at the processing device.

196. The method of claim 193 wherein the processing device is a personal computer.

197. The method of claim 193 wherein the multimedia function includes selecting a range of audio data in response to received input from the user.

198. The method of claim 193 wherein the multimedia function includes applying audio event detection to the time-based media data.

199. The method of claim 193 wherein the multimedia function further includes determining a confidence level associated with the audio event detection.

200. The method of claim 193 wherein the multimedia function includes applying a speaker segmentation function to the time-based media data.

201. The method of claim 193 or 200 wherein the multimedia function includes applying a speaker recognition function to the time-based media data.

202. The method of claim 193 wherein the multimedia function includes applying a sound source localization function to the time-based media data.

203. The method of claim 202 wherein the multimedia function further includes applying audio event detection to the time-based media data.

204. The method of claim 193 wherein the multimedia function includes applying a speech recognition function to the time-based media data.

205. The method of claim 204 wherein the multimedia function includes applying a profile analysis function to the time-based media data.

206. The method of claim 204 wherein the multimedia function includes applying an audio event detection function to the time-based media data.

207. The method of claim 206 wherein the multimedia function further includes applying a speaker recognition function to the time-based media data.

208. The method of claim 206 wherein the multimedia function further includes applying a speaker segmentation function to the time-based media data.

209. The method of claim 206 wherein the multimedia function further includes applying a sound localization function to the time-based media data.

210. The method of claim 193 wherein the multimedia function includes selecting a range of video data in response to received input from the user.

211. The method of claim 193 wherein the multimedia function includes applying a video event detection function to the time-based media data.

212. The method of claim 193 wherein the multimedia function includes applying a color histogram analysis function to the time-based media data.

213. The method of claim 193 wherein the multimedia function includes applying a face detection function to the time-based media data.

214. The method of claim 213 wherein the multimedia function includes applying a clustering function to the time-based media data to merge multiple instances of a face into a representative face image.

215. The method of claim 193 wherein the multimedia function includes applying a face recognition function to the time-based media data.

216. The method of claim 193 wherein the multimedia function includes applying an optical character recognition function to the time-based media data.

217. The method of claim 216 wherein the multimedia function further includes applying a clustering function to the time-based media data to merge similar results of the optical character recognition.

218. The method of claim 193 wherein the multimedia function includes applying a motion analysis function to the time-based media data.

219. The method of claim 193 or claim 218 wherein the multimedia function includes applying a distance estimation function to the time-based media data.

220. The method of claim 193 wherein the multimedia function includes applying foreground/background segmentation function to the time-based media data.

221. The method of claim 193 wherein the multimedia function includes applying a scene segmentation function to the time-based media data.

222. The method of claim 221 wherein the multimedia function further includes applying a face recognition function to the time-based media data.

223. The method of claim 221 wherein the multimedia function further includes applying a face detection function to the time-based media data.

224. The method of claim 221 wherein the multimedia function includes applying an optical character recognition function to the time-based media data.

225. The method of claim 224 wherein the multimedia function further includes applying a face recognition function to the time-based media data.

226. The method of claim 224 wherein the multimedia function includes applying a face detection function to the time-based media data.

227. The method of claim 193 wherein the multimedia function includes applying an automobile recognition function to the time-based media data.

228. The method of claim 227 wherein the multimedia function further includes applying a motion analysis function to the time-based media data.

229. The method of claim 193 wherein the multimedia function includes applying a license plate recognition function to the time-based media data.

230. The method of claim 193 wherein the multimedia function includes applying a visual inspection function to the time-based media data.
